(19) **Europäisches Patentamt**

**European Patent Office**

**Office européen des brevets**

(11) **EP 0 844 936 B1**

(12) **EUROPÄISCHE PATENTSCHRIFT**

(45) Veröffentlichungstag und Bekanntmachung des Hinweises auf die Patenterteilung:
**08.08.2001 Patentblatt 2001/32**

(51) Int Cl.[7]: **B60H 1/00**, F28D 20/00

(21) Anmeldenummer: **96926998.4**

(22) Anmeldetag: **24.07.1996**

(86) Internationale Anmeldenummer:
**PCT/DE96/01356**

(87) Internationale Veröffentlichungsnummer:
**WO 97/06972 (27.02.1997 Gazette 1997/10)**

(54) **WÄRMESPEICHER FÜR EIN KRAFTFAHRZEUG**

HEAT ACCUMULATOR FOR A MOTOR VEHICLE

ACCUMULATEUR DE CHALEUR POUR VEHICULE A MOTEUR

(84) Benannte Vertragsstaaten:
**AT DK ES FI FR GB IT NL SE**

(30) Priorität: **18.08.1995 DE 19530378**

(43) Veröffentlichungstag der Anmeldung:
**03.06.1998 Patentblatt 1998/23**

(73) Patentinhaber: **Modine Manufacturing Company Racine, Wisconsin 53403-2552 (US)**

(72) Erfinder:
• **STRÄHLE, Roland**
 **D-72669 Unterensingen (DE)**
• **STEPHAN, Bernhard**
 **D-70794 Filderstadt (DE)**
• **STREICHER, Bernd**
 **D-70794 Filderstadt (DE)**

(74) Vertreter: **Wolter, Klaus-Dietrich**
 **Modine Europe GmbH,**
 **Patentabteilung**
 **70790 Filderstadt (DE)**

(56) Entgegenhaltungen:
**AU-B- 501 995          DE-A- 4 336 190**
**US-A- 3 853 270**

• **PATENT ABSTRACTS OF JAPAN vol. 7, no. 165 (M-230) [1310] , 20.Juli 1983 & JP,A,58 072838 (SHIMIZU KENSETSU), 30.April 1983,**

**Beschreibung**

Die Erfindung betrifft einen Wärmespeicher für ein Kraftfahrzeug, der in dem Kühlmittelkreislauf eines Kraftfahrzeuges eingebunden ist und der rhythmisch mittels des Kühlmittels be - und entladbar ist, mit mindestens einem Einlaß und einem Auslaß sowie mit einer den Wärmespeicher umgebenden Vakuumisolation, die von mindestens einer Zu - und einer Abflußleitung durchbrochen wird.

Außerdem betrifft die Erfindung ein Verfahren zum Be - und Entladung eines solchen Wärmespeichers für ein Kraftfahrzeug.

Ein Wärmespeicher der eingangs definierten Art ist prinzipiell beispielsweise aus der DE-PS 40 41 626 bekannt. Bei diesem Wärmespeicher ist zur Vermeidung der Vermischung von wärmerem mit kälterem Kühlmittel in dem Speicherraum ein zusätzlicher Zwischenspeicher angeordnet, von dem über ein gesteuertes Ventil das beim Entladen des Speichers einzuleitende kühlere Kühlmittel, welches das im Wärmespeicher vorhandene wärmere Kühlmittel aus dem Speicher herausdrückt, aufgenommen wird. Der Zwischenspeicher kann beispielsweise eine flexible Blase oder eine Kolben-Zylinder Konstruktion sein. Dieser kurz skizzierte Wärmespeicher, ein Vertreter des oft als Membranspeicher bezeichneten Typs, kommt für den Einsatz in Kraftfahrzeugen neuerdings vermehrt in Frage, weil er durch die Vermeidung der Vermischung kälteren mit wärmeren Kühlmittels größere Wärmemengen bereitzustellen vermag.

Ein weiterer dem Oberbegriff entsprechender Wärmespeicher für Kraftfahrzeuge geht aus dem US 3,853,270 hervor. Dieser Wärmespeicher ist jedoch recht voluminös und hinsichtlich seiner Speichereigenschaften nicht besonders effizient, weil Wärme bspw. über die Zu - und Abflußleitungen abfließen kann.

Aus der JP 58-72838 - A ist eine Vorrichtung bekannt, mit der Wasser in einen Speicher ein - und aus dem Speicher abgeleitet werden kann, wobei die Temperaturschichtung im Speicher möglichst wenig beeinträchtigt werden soll. Deshalb strömt das Wasser parallel zum Boden des Speichers aus bzw. in die Vorrichtung. Die Form des Speichers wurde nicht besonders erwähnt.

Aus der DE 43 36 190 A1 geht ein Warmwasserspeicher, insbesondere ein Untertisch-Speicher hervor, der eine besondere Wärmebremse aufweist, um Wärmeverluste zu minimieren. Der Warmwasserspeicher besitzt eine Isolation in der die Zu - und Abflußleitungen wie ein Themosyphon angeordnet sind. Durch das Ein - und Ausströmen wird die Temperaturschichtung innerhalb des Speichers beeinträchtigt.

Aus dem AU 501995 B geht ein Speicherbehälter hervor, der an seinem Boden eine wie ein Doppelrohr gestaltete Vorrichtung mit einer Reihe von Öffnungen hat, die dazu dient, Wasser mit möglichst geringer Beeinträchtigung der Temperaturschichtung einströmen zu lassen.

Ein anderer Wärmespeichertyp, der auch für den Einsatz in Kraftfahrzeugen konzipiert und realisiert ist, ist der Latentwärmespeicher, der aus einem Innenbehälter, dem Speicherkem, in dem sich ein Wärmespeichermittel, z.B. ein Speichersalz, befindet und aus einem Außenbehälter mit einer dazwischen vorgesehenen Wärmeisolation besteht. Anläßlich eines Vortrages auf dem 15. Internationalen Wiener Motorensymposium, vom 28.-29. April 1994, wurden beide Wärmespeichertypen einer kritischen Analyse unterzogen. Der größeren Speicherkapazität des Latentwärmespeichers steht seine geringere Entladeleistung gegenüber. Als Warmwasserspeicher wurde hier ein Vertreter des Membranspeichertyps gewählt.

Die Latentwärmespeicher sind recht aufwendig in der Herstellung und schaffen auch Probleme hinsichtlich der Entsorgung des Speichermittels. Membranspeicher sind diesbezüglich günstiger, aber durch die eingebaute Membran, mit zusätzlich erforderlichen Bypässen, sind auch diese immer noch zu teuer und darüber hinaus im Langzeiteinsatz nicht gut genug. Ein wesentlicher weiterer Nachteil beider Speichertypen besteht in ihrer schlechten Anpaßbarkeit an verschiedene Behältergeometrien. Gerade der im Motorraum von Kraftfahrzeugen zur Verfügung stehende Platz wird immer kleiner, weil auch die Zahl der einzubauenden Aggregate bei gleichem Raum und Gewicht zunimmt.

In der Haustechnik und anderen Bereichen werden überwiegend Schichtenspeicher eingesetzt, bei denen die unterschiedliche Dichte von Flüssigkeiten bei verschiedener Temperatur ausgenutzt wird, um möglichst vermischungsarm kühlere Flüssigkeit in den unteren Speicherraum einzuleiten sowie wärmere Flüssigkeit aus dem oberen Speicherraum zu entnehmen oder beispielsweise von Sonnenenergie erwärmte Flüssigkeit zuzuführen. Solche Wärmespeicher sind isolierte Behälter von im Vergleich zu den angesprochenen Kraftfahrzeug - Wärmespeichern beträchtlichen Dimensionen, mit einem Speichervolumen bis in den Bereich von vielen $m^3$. Diese Wärmespeicher werden nie oder selten vollständig entladen, so daß sie anderen Restriktionen unterliegen als diejenigen in Kraftfahrzeugen.

Ausgehend vom geschilderten Stand der Technik besteht die Aufgabe der Erfindung darin, einen Wärmespeicher für ein Kraftfahrzeug zur Verfügung zu stellen, der hinsichtlich seiner Wärmespeicherleistung optimiert ist, d. h. mit minimierter Vermischung von wärmerem mit kälterem Kühlmittel und minimierten Wärmeverlusten, der zu den günstigsten Herstellungskosten seiner Klasse führt und der sich bei gleich guten Eigenschaften an Räume unterschiedlicher Gestalt anpassen läßt.

Diese Aufgabe ist erfindungsgemäß durch die kennzeichnenden Merkmale des Anspruchs 1 sowie durch das Verfahren gemäß Anspruch 12 gelöst worden. Die Merkmale der abhängigen Ansprüche dienen der Ausgestaltung.

Der Wärmespeicher ist ein nach dem Schichtspeicherprinzip arbeitender Speicher, der in dem Kühlmittelkreislauf des Kraftfahrzeuges eingebunden ist. Der Einlaß und der Auslaß sind im unteren beziehungsweise oberen Speicherraum angeordnet und tragen jeweils eine Ladewechselvorrichtung, deren Gestalt an diese Räume angepaßt ist. Die Summe der Strömungsquerschnitte in den Ladewechselvorrichtungen ist etwa gleich groß.

Die Zu - bzw. Abflußleitungen sind thermosyphonartig innerhalb der Isolation angeordnet, so wie es bei Latentwärmespeichem an und für sich bekannt ist. Dadurch wird erreicht, daß sich im vertikalen Bereich der Anschlußleitungen eine durch die unterschiedliche Dichte der Kühlflüssigkeit bei unterschiedlichen Temperaturen hervorgerufene Temperatur-Sperrschicht einstellt, die die ungewollte Entladung des Wärmespeichers weitestgehend verhindert. In den Ansprüchen 2 und 3 sind Varianten beschrieben, bei denen die Leitungen im unteren Speicherbereich in die Isolation eintreten. Nach Anspruch 2 laufen beide Leitungen parallel, mit einem in Einbaulage vertikalen Bereich, nach oben und treten dort mit einem vertikalen Abstand voneinander in den oberen Speicherraum ein. Der vertikale Abstand stellt keine wesentliche Beeinträchtigung hinsichtlich der Ausbildung der Temperatur - Sperrschicht dar. Er führt zu fertigungstechnischen Vorteilen und zur Reduzierung der Breite des oberen Speicherraumes. Die eine Leitung ist von dort zum oberen Auslaß geführt und die andere Leitung geht innerhalb des Speicherraumes nach unten zum Einlaß. Nach Anspruch 3 tritt die zum Einlaß führende Leitung nach Beschreibung eines innerhalb der Isolation verlaufenden Bogens mit einem ausreichenden vertikalen Bereich in den unteren Speicherraum ein und führt direkt zum Einlaß. Dies kann ebenfalls aus Platzgründen vorteilhaft sein.

Der Anspruch 4 beinhaltet eine weitere alternative Leitungsführung, bei der beide Leitungen innerhalb der Isolation einen Bogen beschreiben und danach in den oberen Speicherraum eintreten.

Die Erfindung schlägt einen Wärmespeicher des Schichtspeichertyps zur besonderen Eignung für den Einbau in Kraftfahrzeugen vor. Der Schichtspeicher kann alternativ mit Umkehr der Strömungsrichtung im Speicher be - und entladen werden. Diese Maßnahme wird für kleinere Speichervolumen, etwa zwischen 4 und 10 ltr. und hauptsächlich für den Einsatz im PKW sinnvoll sein, denn dort finden gewöhnlich viele Starts und Kurzstreckenfahrten statt. Darauf zielt ebenfalls der Verfahrensanspruch 14. Ein solcher Speicher ist hinsichtlich seiner Entladung und seiner Beladung optimiert. Bei der Entladung strömt das kalte Kühlmittel von unten ein und in kürzester Zeit - bei Einsatz von Kühlmittelpumpen der neuesten Generation, die eine Fördermenge von ca. 1200l/min aufweisen - innerhalb von 10 s, ist die Wärmemenge des Speichers nahezu vollständig entladen und zur Nutzung bereitgestellt. Die nahezu vollständige Be - oder Entladung bedeutet mit anderen Worten, daß mindestens etwa 80% der Gesamtwärmemenge des Speichers innerhalb des genannten Zeitraumes bereitgestellt sind. Wobei die Gesamtwärmemenge auch jene im Material des Speichers gespeicherte Wärme einschließt, die nicht zur Nutzung herangezogen werden kann. Es geht also um die nahezu vollständige Entladung der effektiv aus der Flüssigkeit nutzbaren Wärmemenge. Die Beladung, d.h. die Einspeisung des warmen Kühlmittels in den Speicher erfolgt von oben, wodurch auch kleinere Wärmemengen unter Ausnutzung der Temperaturschichtung schnell dem Speicher zuführbar sind. Zur Strömungsrichtungsumkehr ist im Kühlmittelkreislauf bekannte Steuerungs- und Regelungstechnik vorhanden. Der Austausch von mindestens etwa 80% der Gesamtwärmemenge soll etwa 60 bis 300 mal pro Stunde durchführbar sein und bezieht sich hinsichtlich der oberen Grenze auf das kleine Speichervolumen von 41, bei Verwendung von Kühlmittelpumpen mit 1200l/h und hinsichtlich der unteren Grenze auf das große Speichervolumen von 10ltr und Verwendung von üblichen Kühlmittelpumpen mit 600l/h. Umgerechnet liegt für die Be-oder Entladung ein Zeitraum von etwa 10 bis 60s vor. Demgegenüber sieht Anspruch 5 die Be-und Entladung ohne Umkehr der Strömungsrichtung vor. Hier erfolgt die Be - und Entladung durch die Einleitung des Kühlmittels von unten. Ein solcher Speicher ist nur hinsichtlich seiner Entladung optimiert. Die optimierte Entladung ist bei Wärmespeichern in Kraftfahrzeugen besonders wichtig, weil es darum geht, beim Kaltstart zwecks Reduzierung der Abgasemission, Kabinenheizung etc., so schnell und so viel als möglich gespeicherte Wärmemenge bereitzustellen. Diese erfinderische Weiterentwicklung wird deshalb eher für etwas größere Speichervolumen, etwa von 7 bis 15 ltr. und den Einsatz im LKW sinnvoll sein, weil dort die Anzahl der Kurzstreckenfahrten wesentlich geringer ist, die im Kühlmittel vorhandene Wärmemenge viel größer und deshalb auch die Beladung des Schichten-Wärmespeichers, im Unterschied zu bekannten Schichtspeichern, von unten erfolgen kann. Außerdem liegt hier selbstverständlich der Vorteil in einer weniger aufwendigen Regelungstechnik.

Sowohl der Einlaß als auch der Auslaß tragen spezielle Ladewechselvorrichtungen, die durch ihre besondere, in den Ansprüchen 6 bis 11 beschriebene Gestaltung eine weitgehend vermischungsarme Einleitung der Flüssigkeit gestatten. Dabei ist besonders hervorzuheben, daß durch Ladewechselvorrichtungen verschiedener Ausführung, als Drallauslass oder als langgestrecktes Bauteil mit einer Reihe von Ein - bzw. Auslaßöffnungen, die Möglichkeit geschaffen wurde, diese Ladewechselvorrichtungen an die jeweilig notwendige Formgestaltung des Wärmespeichers anzupassen. Bei langer und relativ flacher Form des Wärmespeichers wird ein langgestrecktes Bauteil als Ladewechselvorrichtung eingesetzt.(Ansprüche 8 bis 11) Bei stehender zylindrischer Form oder etwa quadratischem Querschnitt kommt der Drallauslaß gemäß den Ansprüchen 6 und 7 zur Anwendung. So kann beispielsweise im oberen Speicherraum ein Drallauslaß die günstigsten Ergebnisse aufweisen, während sich im unteren Speicherraum ein langgestrecktes Bauteil als Ladewechselvorrichtung am besten bewährt.(oder umgekehrt) Es werden somit Wärmespeicher mit unterschiedlichster Formgestaltung, die in verwinkelten Stellen des Fahrzeuges oder des Motorraumes angebracht werden können, zur Verfügung gestellt. Die Summe der Strömungsquerschnitte, d. h. die Summe der Flächen der Ein bzw. Ausströmöffnungen der Ladewechselvorrichtungen sind etwa gleich groß. Diese sind so berechnet und ausgelegt, daß das über die Zu - bzw. Abflußleitung ankommende Kühlmittel in seiner Strömungsgeschwindigkeit soweit herabgesetzt wird, daß es beim Eintritt in den Wärmespeicher die gemäß dem beanspruchten Verfahren gefundene Strömungsgeschwindigkeit zwischen 0,1 bis 0,5 m/s aufweist. Bei dieser Strömungsgeschwindigkeit und Verwendung der beschriebenen Ladewechselvorrichtungen ist eine überraschend gute, vermischungsarme Einleitung der Flüssigkeit möglich und insgesamt sind für den vorgesehenen Einsatzzweck gute Ergebnisse zu erzielen. Nach dem beanspruchten Verfahren wird ferner vorgeschrieben, daß die nahezu vollständige Be - oder Entladung innerhalb von etwa 10 bis 100 s durchgeführt wird. Es muß durchaus als überraschend angesehen werden, daß sich ein Schichtspeicher in einem Automobil, wo es auf Grund sehr häufiger Starts und Kurzstreckenfahrten, die mit ständigem Be - und Entladen des Speichers einhergehen, bestens eignet.

Durch das völlige Fehlen jeglicher Einbauteile, wie Membran, Kolben-Zylinder oder Speicherkern mit Latentspeichermittel, wurde bezüglich der Herstellungskosten ein deutlicher Fortschritt erzielt. Aus den gleichen Gründen sind auch sämtliche Bedenken hinsichtlich eines nicht ausreichenden Langzeiteinsatzes ausgeräumt worden.

Nachfolgend wird die Erfindung in einigen Ausführungsbeispielen anhand von Zeichnungen beschrieben.

Es zeigen :

Fig. 1 : Vorderansicht eines Wärmespeichers mit angepaßter Form

Fig. 2 : Seitenansicht des Wärmespeichers von Fig.1

Fig. 3 : Vorderansicht eines Wärmespeichers mit gleicher Form im oberen und unteren Speicherraum

Fig. 4 : Seitenansicht von Fig.3

Fig. 5 : Vorderansicht des verwendeten Dralldurchlasses

Fig. 6 : Schnitt durch Fig.5

Fig. 7 : Ein langgestrecktes Bauteil als Ladewechselvorrichtung mit einem Zwischenboden

Fig. 8 : Schnitt durch Fig.7

Fig. 9 : Variante von Fig. 7 und 8 ohne Zwischenboden

Fig.10 : Längsschnitt von Fig. 9

Fig.11 : Querschnitt von Fig. 9

Fig.12 : Doppelrohr

Fig.13 : Schnitt durch das Doppelrohr

Fig.14 : Vorderansicht eines Speichers, bei der die eine Leitung einen Bogen inner halb der Isolation aufweist und in den unteren Speicherraum eintritt

Fig.15 : Seitenansicht von Fig. 14

Fig.16 : Entladungsdiagramm

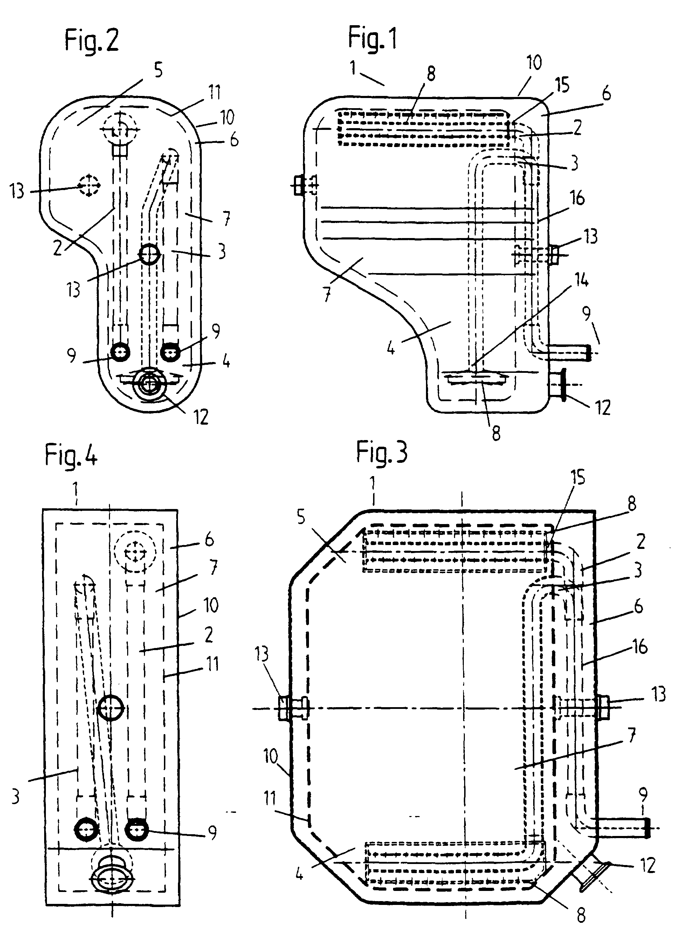

Die Fig. 1 und 2 zeigen einen Wärmespeicher 1 mit unregelmäßiger Form, so wie er für den Einsatz in einem Automobil in Frage kommen könnte. Im unteren Speicherraumbereich 4 weist er einen horizontalen Querschnitt auf, der nahezu quadratisch sein könnte, während er nach oben hin sowohl in der Länge als auch in der Breite deutlich größer wird und im oberen Speicherbereich 5 einen deutlichen rechteckigen Querschnitt besitzt. In dieser gezeichneten Position erfolgt auch der Einbau des Wärmespeichers 1 in das Automobil.

Die Isolation 6 des Wärmespeichers 1 besteht aus einer Vakuumisolation, die sich als am besten geeignet erwiesen hat und auch sehr gute Langzeitwirkung besitzt. Deshalb besteht der Wärmespeicher 1 aus einem äußeren Gehäuse 10 und einem inneren Gehäuse 11, die dazwischen den Isolationsraum 6 einschließen. Der Vakuumisolationsraum ist mit einem geeigneten Isolationspulver gefüllt, daß über den Befüllstutzen 12 in bekannter Weise in den Isolationsraum 6 eingebracht und verschlossen wird.

In der Nähe des Befüllstutzens 12 befinden sich auch die Anschlußstutzen 9 für den An schluß an einen nicht dargestellten Kühlwasserkreislauf. Im Bereich des Durchbruchs der Anschlußstutzen 9 bzw. der Leitungen 2;3 durch das äußere Gehäuse 10 können zur weiteren Senkung der durch Konvektion eintretenden Wärmeverluste Werkstoffe mit hohen Wärmeisolationseigenschaften eingesetzt werden.

Zwischen dem inneren 11 und äußeren Gehäuse 10 sind Abstützungen 13 angeordnet, die gleichzeitig als Befestigungspunkte des Speichers 1 dienen können.

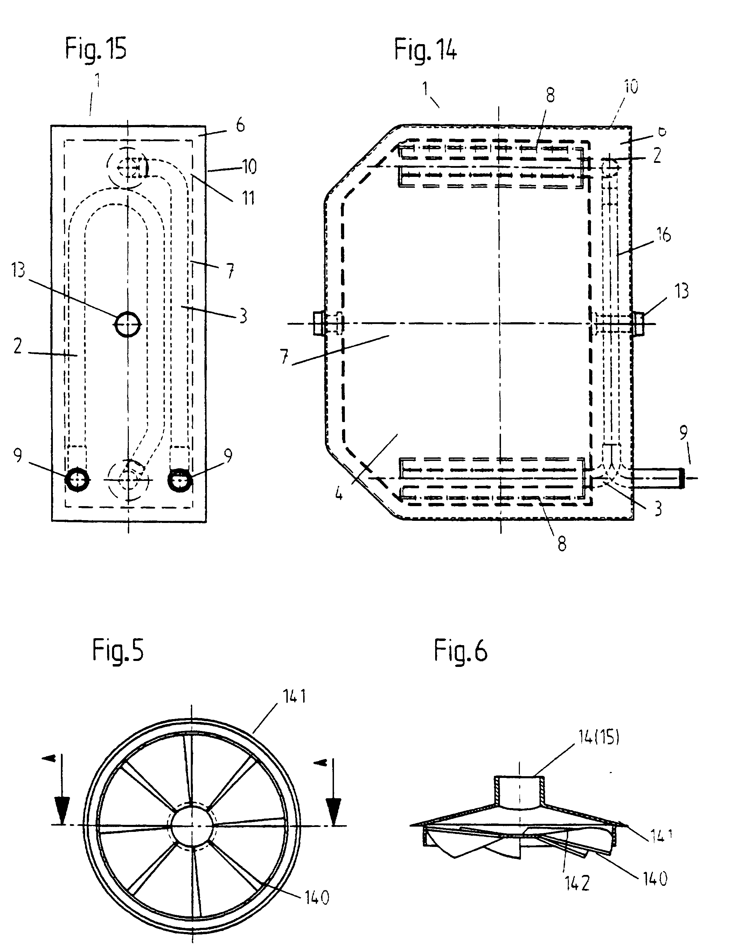

Die Leitungen 2; 3 gehen innerhalb der Isolation 6 nach oben und durchbrechen das innere Gehäuse 11, um in den oberen Speicherraum 5 einzutreten. Aus Platzgründen durchbricht die Leitung 3 das innere Gehäuse 11 etwas unterhalb von der Leitung 2, wodurch jedoch keine Beeinträchtigung der Isolationswirkung zu erwarten ist. Die Leitung 2 erstreckt sich in einem Bogen innerhalb des Speicherraumes 7 nach unten zum Einlaß 14 und trägt eine Ladewechselvorrichtung 8. Die Ladewechselvorrichtung 8 ist als Drallauslaß ausgeführt, der in den Fig. 5 und 6 dargestellt ist. Die Leitung 2 ist zentral an dem Drallauslaß angeschlossen. Vom Zentrum ausgehend sind radial verlaufende Flügel 140 mit einem entsprechenden Anstellwinkel 142 vorgesehen, die bis zum Umfang 141 des Drallauslasses reichen. Dadurch erfährt das einströmende Kühlmittel eine horizontal gerichtete Umlenkung und verteilt sich zunächst im unteren Speicherraum 4, um dann, bei geringster Vermischung mit dem im Speicher 1 vorhandenen wärmeren Kühlmittel, nach oben zu steigen. Der Grad der Vermischung hängt von der Einströmgeschwindigkeit ab. Deshalb ist die Einströmgeschwindigkeit etwa zwischen 0,1 und 0,5 m/s vorgesehen. Umfangreiche Versuche haben gezeigt, daß innerhalb dieses Bereiches ein guter Kompromiß liegt, sowohl hinsichtlich der notwendigen häufigen Ladungswechsel als auch der zu berücksichtigen Strömungsquerschnitte und der noch ausreichenden Vermischungsarmut. Beispielsweise werden bei Verwendung von Kühlmittelpumpen mit V = 600l/h und bei angenommenen 11 Bohrungen (Einströmöffnungen) mit 10mm Durchmesser nach der Formel

$$v = \frac{V}{A} = 0{,}19 \text{ m/s}$$

erreicht.

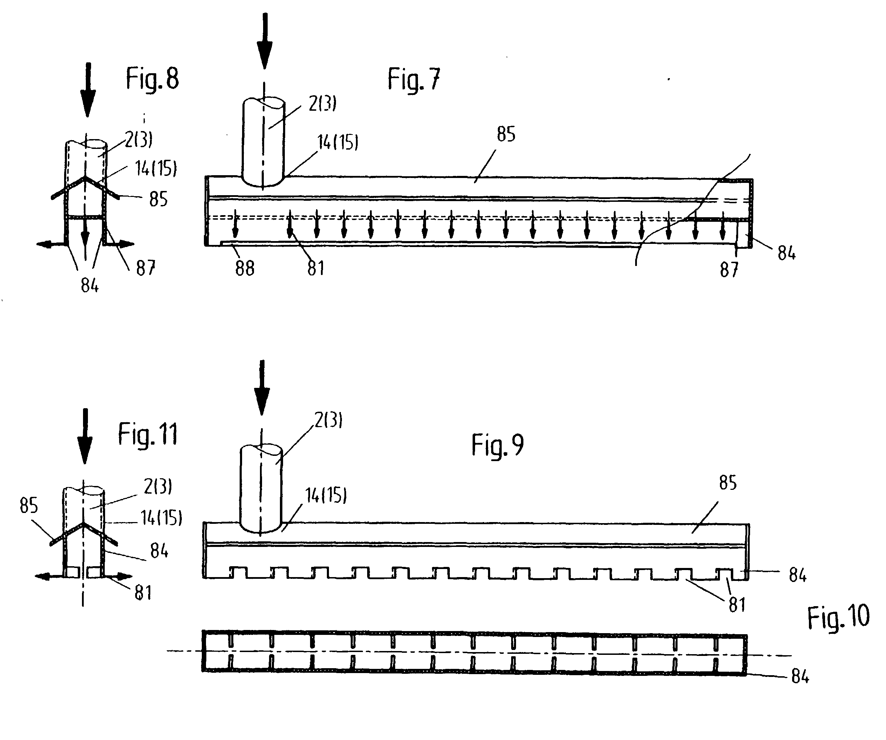

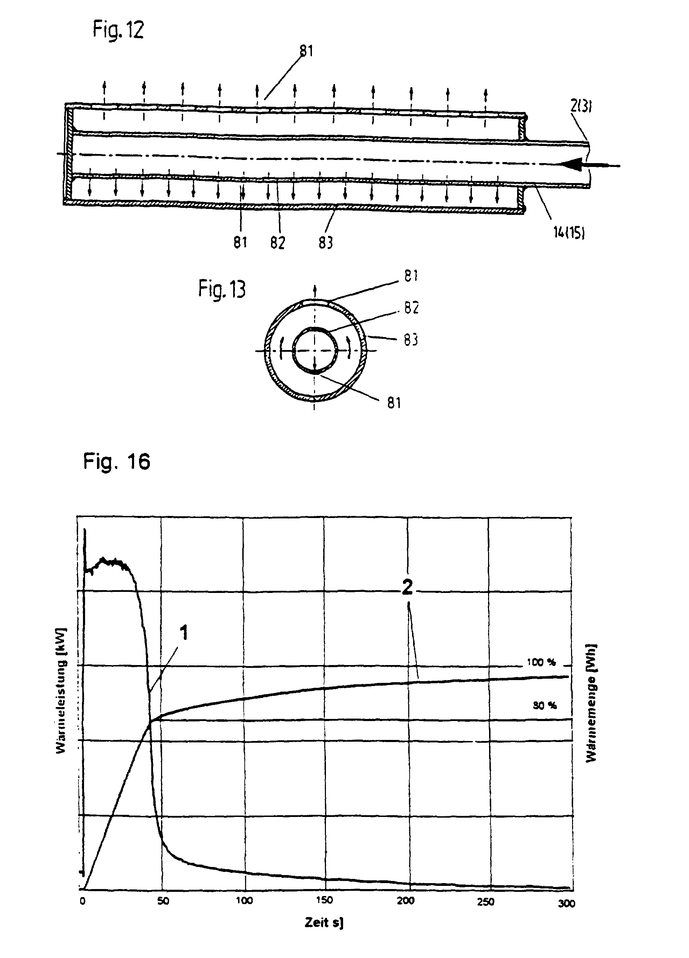

Bei V = 1200l/h und den gleichen Einströmquerschnitten (A) entsprechend 0,38 m/s. Die Leitung 2 im oberen Speicherraum 5 geht direkt zur dortigen Ladewechselvorrichtung 8, dem Doppelrohr, dargestellt in den Fig. 12 und 13, das weiter unten beschrieben ist. Hier sind jedoch auch Ladewechselvorrichtungen 8 gemäß den Fig. 7 bis 11 geeignet. Bei den Fig. 7 bis 11 handelt es sich um fertigungstechnisch günstig, bspw. als Strangpreßprofil, herzustellende Bauteile. Die Fig.7 und 8 zeigen eine Variante, bei der zwischen den Längswänden 84 ein horizontaler Zwischenboden 87 angeordnet ist, der den Raum 86 unterteilt. Der Zwischenboden 87 verläuft etwa parallel zum Boden des Speicherraumes 5 und besitzt bezüglich der Strömungsgeschwindigkeit angepaßte Größen von Einströmöffnungen, damit sich das Kühlwasser zunächst in dem durch den Zwischenboden 87 gebildeten oberen Raum ausbreitet, bevor es durch die Einströmöffnungen weiterströmt. Der Ein bzw. Austritt des Kühlwassers in den Speicherraum 4; 5 erfolgt hier durch Ein - bzw. Ausströmschlitze 88, die an den am Boden anliegenden Längskanten der Längswände 84 angeordnet sind.

Im Unterschied zu den Fig. 7 und 8 ist in der Ladewechselvorrichtung 8 der Fig. 9 bis 11 kein Zwischenboden 87 vorgesehen. Die Flüssigkeit verteilt sich hier in dem Raum 86 und tritt durch eine Reihe von Einströmöffnungen 81 in der am Boden anliegenden Längsseite der Längswände 84 in den Speicherraum 7 ein. Die Ausschnitte der Öffnungen 81 sind nach innen umgebogen und tragen zur Verbesserung der Turbulenzausbildung und Verteilung über die gesamte Länge bei. Bei beiden Varianten wird der Raum 86 durch einen spitzdachartigen Abschluß 85 oben begrenzt. Die Längskanten des Dachabschlusses 85 reichen seitlich etwas über die vertikalen Längswände 84, was strömungstechnische Vorteile hat, weil die unten einströmende Flüssigkeit an dieser Stelle noch eine Umlenkung erfährt.

In den Fig. 12 und 13 ist das zum Einsatz kommende Doppelrohr abgebildet. Dieses besteht aus dem Innenrohr 82 mit vielen, relativ kleinen Bohrungen als Ein - bzw. Ausströmöffnungen 81, damit das Kühlwasser sich zunächst in dem gesamten Innenrohr 82 ausbreitet, bevor es in das Außenrohr 83 gelangt. Das Außenrohr 83 weist größere Bohrungen auf, die sich auf der gegenüberliegenden Seite von den erstgenannten Bohrungen befinden. Dadurch wird die Flüssigkeit dazu veranlaßt, innerhalb des Rohres 83 einen längeren Weg zu nehmen und gleichmäßig aus allen Bohrungen in den Speicherraum 4 oder 5 einzutreten.

Die Einströmung der Flüssigkeit ist bei allen Ausführungsformen der Ladewechselvorrichtung 8 indirekt.

Die Fig. 3 und 4 zeigen eine andere Form des Wärmespeichers 1, bei der oben und unten die gleichen langgestreckten Bauteile als Ladewechselvorrichtung 8 vorgesehen sind, weil die untere und obere Speicherraumform 4;5 gleich ist. Beide Leitungen 2;3 treten unten in die Isolation 6 des Speichers 1 ein und gehen innerhalb die Isolation 6 nach oben, um in den oberen Speicherraum 5 zu münden.

Im Unterschied dazu zeigen die Fig. 14 und 15 eine andere Anordnung der Leitungen 2; 3. Wie die Fig. 15 am besten zeigt, verfügt dieser Speicher über eine größere Breite und bietet somit ausreichend Platz, um die unten in die Isolation 6 eintretende Leitung 2 innerhalb der Isolation 6 in einem Bogen mit ausreichendem vertikalen Bereich 16 zu führen. Diese Leitung tritt direkt in den unteren Speicherraum 4 ein, um dort die Ladewechselvorrichtung 8 zu tragen. Die Leitung 3 geht genau wie in den Fig. 3 und 4 vertikal nach oben und tritt in den oberen Speicherraum 5 ein.

Die Fig. 16 zeigt ein Entladungsdiagramm, in dem die Wärmeleistung und die Wärmemenge über die Zeit dargestellt sind. Über einen Zeitraum von ca. 40s bleibt die Wärmeleistung etwa konstant, d.h. über diesen Zeitraum hat die geringe Vermischung zwischen warmem und kaltem Kühlmittel keinen Einfluß auf die Temperatur der ausströmenden Flüssigkeit.Dies zeigt die Kurve 1. Die Kurve 2 macht deutlich, daß ca. 80% der Gesamtwärmemenge während dieser Zeit ausgebracht werden. Danach geht die Kurve 2 in eine deutlich geringere Steigung über und zeigt an, daß hier der Eintritt in das Mischgebiet erfolgt.

**Patentansprüche**

1. Wärmespeicher für ein Kraftfahrzeug, der in dem Kühlmittelkreislauf des Kraftfahrzeuges eingebunden ist und der rhythmisch mittels des Kühlmittels be - und entladbar ist, mit mindestens einem Einlaß (14) und einem Auslaß (15) sowie mit einer den Wärmespeicher umgebenden Vakuumisolation (6), die von mindestens einer Zufluß und einer Abflußleitung (2; 3) durchbrochen wird, wobei der Wärmespeicher (1) ein nach dem Schichtspeicher - Prinzip arbeitender Speicher (1) ist, und der Einlaß (14) und der Auslaß (15) im unteren beziehungsweise oberen Speicherraum (4; 5) angeordnet sind, dadurch gekennzeichnet, daß der Einlaß und des Auslaß jeweils eine Ladewechselvorrichtung (8) gleicher oder verschiedener Konstruktion tragen, deren Gestalt an die gleiche oder unterschiedliche Gestalt aufweisenden Speicherräume (4; 5) angepaßt ist und deren Summe der Strömungsquerschnitte etwa gleich groß ist und daß die Zu - und Abflußleitungen (2;3) sich zumindest über einen in Einbaulage des Wärmespeichers (1) verlaufenden, der Ausbildung einer Temperatur - Sperrschicht dienenden, vertikalen Bereich (16) innerhalb der Vakuumisolation (6) erstrecken.

2. Wärmespeicher für ein Kraftfahrzeug nach Anspruch 1, dadurch gekennzeichnet, daß beide Leitungen (2; 3) im unteren Speicherbereich in die Isolation (6) eintreten, sich etwa vertikal innerhalb der Isolation (6) zum oberen Speicherbereich erstrecken, dort mit einem vertikalen Abstand voneinander in den oberen Speicherraum (5) eintreten, von wo eine Leitung (2) zum Auslaß (15) führt und die andere Leitung (3) innerhalb des Speicherraumes (7) nach unten zum Einlaß (14) geführt ist.

3. Wärmespeicher nach Anspruch 1, dadurch gekennzeichnet, daß beide Leitungen (2; 3) im unteren Speicherbereich in die Vakuumisolation (6) eintreten, sich etwa vertikal innerhalb der Vakuumisolation (6) zum oberen Speicherbereich erstrecken, daß die Leitung (2) in den oberen Speicherraum (5) eintritt und zum Auslaß (15) führt und daß die Leitung (3) innerhalb der Isolation (6) ein Bogenstück mit ausreichendem vertikalen Bereich (16) aufweist, in den unteren Speicherraum (4) eintritt und direkt zum Einlaß (14) führt.

4. Wärmespeicher nach Anspruch 1, dadurch gekennzeichnet, daß beide Leitungen (2;3) im oberen oder mittleren Speicherbereich in die Isolation (6) eintreten, innerhalb der Vakuumisolation (6) bis zu einem Bogen nach unten geführt sind und mit einem ausreichenden vertikalen Bereich (16) nach oben gehen, um in den oberen Speicherraum (5) einzutreten, von wo die Leitung (2) zum Auslaß (15) führt und die andere Leitung (3) innerhalb des Speicherraumes (7) nach unten zum Einlaß (14) geführt ist.

5. Wärmespeicher nach den Ansprüchen 1 bis 4, dadurch gekennzeichnet, daß das Speichervolumen etwa 4 bis 15 ltr. beträgt und die Be - und Entladung mit konstanter Strömungsrichtung im Wärmespeicher (1) erfolgt, wobei die Einströmung ausschließlich in dem unteren Speicherraum (4) durchführbar ist.

6. Wärmespeicher nach einem der vorstehenden Ansprüche, dadurch gekennzeichnet, daß die Ladewechselvorrichtung (8) als Drallauslaß mit im wesentlichen gleichen Längen - und Breitenabmessungen ausgeführt ist.

7. Wärmespeicher nach dem Anspruch 6, dadurch gekennzeichnet, daß der Drallauslaß vorzugsweise kreisförmig ist, mit vom im Zentrum befindlichen Einlaß(14)/Auslaß (15) strahlenförmig ausgehenden und bis zum Umfang (141) reichenden, einen Anstellwinkel (142) aufweisenden Flügeln (140).

8. Wärmespeicher nach einem der Ansprüche 1 bis 5, dadurch gekennzeichnet, daß die Ladewechselvorrichtung (8) eine wesentlich größere Länge als Breite aufweist und wenigstens eine Reihe von Ein - bzw. Ausströmöffnungen (81) zur indirekten Einleitung besitzt.

9. Wärmespeicher nach Anspruch 8, dadurch gekennzeichnet, daß die Ladewechselvorrichtung (8) aus koaxial angeordneten Rohren (82;83) mit einer Reihe von Ein-bzw Ausströmöffnungen (81) in dem Innenrohr (82) und auf der gegenüberliegenden Seite im Außenrohr (83) besteht.

10. Wärmespeicher nach Anspruch 8, dadurch gekennzeichnet, daß die Ladewechselvorrichtung (8) zwei seitliche vertikale Längswände (84) aufweist, die an ihren am Boden des Speicherraumes (4;5) anliegenden Längsseiten eine Reihe von Ein-und Ausströmöffnungen (81) besitzen, wobei die Ausschnitte der Öffnungen (81) nach innen umgebogen sind und, daß die Längswände (84) an ihren Stirnseiten verschlossen sind sowie durch einen sie verbindenden oberen spitzdachartigen Abschluß (85) einen Raum (86) einschließen.

11. Wärmespeicher nach Anspruch 8 und 10, dadurch gekennzeichnet, daß der Raum (86) durch einen Ein - bzw. Ausströmöffnungen aufweisenden Zwischenboden (87) unterteilt ist und die am Boden des Speicherraumes (4;5) anliegenden Längsseiten der Längswände (84) mindestens über einen wesentlichen Längenabschnitt reichende Ein- bzw Ausströmschlitze (88) aufweisen.

12. Verfahren zum Be - und Entladen eines Wärmespeichers für ein Kraftfahrzeug, gemäß Anspruch 1 oder einem der Ansprüche 2 bis 11, bei dem die Beladung und die Entladung durch Einleiten des Kühlmittels und durch gleichzeitiges Hinausschieben des im Wärmespeicher vorhandenen Kühlmittels durchgeführt wird,

dadurch gekennzeichnet, daß die Entladung des Wärmespeichers (1) durch die Einleitung des kalten Kühlmittels in den unteren Speicherraum (4) und die Beladung durch die Einleitung des warmen Kühlmittels in den oberen Speicherraum (5) mit einer Strömungsgeschwindigkeit von etwa 0,1 bis 0,5 m/s durchgeführt werden und unter Ausnutzung der Temperatur - Schichtung die nahezu vollständige Be - oder Entladung des Wärmespeichers (1) innerhalb von 10 bis 100s erfolgt.

## Claims

1. Heat accumulator for a motor vehicle, which is incorporated into the coolant circuit of the motor vehicle and can be charged and discharged rhythmically by means of the coolant, with at least one inlet (14) and one outlet (15) and with a vacuum insulation (6) that surrounds the heat accumulator and is penetrated by at least one inflow and one outflow line (2; 3), the heat accumulator (1) being an accumulator (1) that operates on the stratified accumulator principle and the inlet (14) and the outlet (15) being arranged in the lower accumulator space (4) and the upper accumulator space (5) respectively, characterized in that the inlet and the outlet each carry a charge exchange device (8) of identical or different construction, the shape of which is matched to the accumulator spaces (4; 5) of identical or different shape and the sum of the flow cross sections of which is approximately equal, and in that the inflow and outflow lines (2; 3) extend at least over a vertical region (16) that extends within the vacuum insulation (6) in the installation position of the heat accumulator (1) and is used to form a temperature barrier layer.

2. Heat accumulator for a motor vehicle according to Claim 1, characterized in that both lines (2; 3) enter the insulation (6) in the lower accumulator region, extend approximately vertically within the insulation (6) to the upper accumulator region, and enter the upper accumulator space (5) there at a vertical distance from one another, from where one line (2) leads to the outlet (15) and the other line (3) is directed downwards within the accumulator space (7) to the inlet (14).

3. Heat accumulator according to Claim 1, characterized in that both lines (2; 3) enter the vacuum insulation (6) in the lower accumulator region, extend approximately vertically within the vacuum insulation (6) to the upper accumulator region, in that the line (2) enters the upper accumulator space (5) and leads to the outlet (15), and in that the line (3) has within the insulation (6) an elbow piece with an adequate vertical region (16), enters the lower accumulator space (4) and leads directly to the inlet (14).

4. Heat accumulator according to Claim 1, characterized in that both lines (2; 3) enter the insulation (6) in the upper or central accumulator region, are directed downwards within the vacuum insulation (6) as far as an elbow and extend sufficiently far upwards with a vertical region (16) that they enter the upper accumulator space (5), from where the line (2) leads to the outlet (15) and the other line (3) is directed downwards within the accumulator space (7) to the inlet (14).

5. Heat accumulator according to Claims 1 to 4, characterized in that the accumulator volume is about 4 to 15 litres and charging and discharging takes place in a constant direction of flow in the heat accumulator (1), inflow being possible only in the lower accumulator space (4).

6. Heat accumulator according to one of the preceding claims, characterized in that the charge exchange device (8) is embodied as a swirl outlet with essentially equal length and width dimensions.

7. Heat accumulator according to Claim 6, characterized in that the swirl outlet is preferably circular, with vanes (140) that radiate from the inlet (14)/outlet (15) situated at the centre and extend as far as the circumference (141) and have an angle of attack (142).

8. Heat accumulator according to one of Claims 1 to 5, characterized in that the length of the charge exchange device (8) is significantly greater than its width and it has at least one row of inflow and outflow openings (81) for indirect introduction.

9. Heat accumulator according to Claim 8, characterized in that the charge exchange device (8) comprises coaxially arranged tubes (82; 83) with a row of inflow and outflow openings (81) in the inner tube (82) and on the opposite side in the outer tube (83).

10. Heat accumulator according to Claim 8, characterized in that the charge exchange device (8) has two lateral vertical longitudinal walls (84), which have a row of inflow and outflow openings (81) on their longitudinal sides, which rest on the bottom of the accumulator space (4; 5), the cutouts of the openings (81) being bent inwards, and in that the longitudinal walls (84) are closed at their ends and enclose a space (86) by means of an upper termination (85) in the form of a pointed roof that connects them.

11. Heat accumulator according to Claim 8 and 10, characterized in that the space (86) is subdivided by an intermediate plate (87) having inflow and outflow openings, and the longitudinal sides of the longitudinal walls (84), the said longitudinal sides resting on the bottom of the accumulator space (4; 5), have inflow and outflow slots (88) that extend at least over a significant portion of their length.

12. Method for charging and discharging a heat accumulator for a motor vehicle in accordance with Claim 1 or one of Claims 2 to 11, in which charging and discharging are accomplished by introducing the coolant and simultaneously pushing out the coolant present in the heat accumulator, characterized in that the discharging of the heat accumulator (1) is performed by introducing the cold coolant into the lower accumulator space (4) and charging is performed by introducing the warm coolant into the upper accumulator space (5) at a flow velocity of about 0.1 to 0.5 m/s, and virtually complete charging or discharging of the heat accumulator (1) is achieved within 10 to 100 s, temperature stratification being exploited.

**Revendications**

1. Accumulateur de chaleur pour un véhicule à moteur, qui est fixé dans le circuit de fluide de refroidissement du véhicule à moteur et peut être chargé et déchargé rythmiquement avec le fluide de refroidissement, comprenant au moins une entrée (14) et une sortie (15) ainsi qu'une isolation sous vide (6) entourant l'accumulateur de chaleur, laquelle est percée par au moins une conduite d'amenée et une conduite d'évacuation (2, 3), l'accumulateur de chaleur (1) étant un accumulateur fonctionnant selon le principe de l'accumulation par couches, et l'entrée (14) et la sortie (15) étant disposées dans la chambre inférieure, respectivement supérieure, (4, 5) de l'accumulateur, caractérisé en ce que l'entrée et la sortie portent chacune un dispositif d'alternance de charge (8) de même construction ou de construction différente, dont la forme est adaptée aux chambres de l'accumulateur (4, 5) présentant une forme identique ou différente, et dont la somme des sections transversales d'écoulement est approximativement identique et en ce que les conduites d'amenée et d'évacuation (2, 3) s'étendent au moins sur une région verticale (16) s'étendant dans la position de montage de l'accumulateur de chaleur (1), servant à la création d'une couche isolante vis-à-vis de la température, à l'intérieur de l'isolation sous vide (6).

2. Accumulateur de chaleur pour un véhicule à moteur selon la revendication 1, caractérisé en ce que les deux conduites (2, 3) pénètrent dans l'isolation (6) dans la région inférieure de l'accumulateur, s'étendent approximativement verticalement à l'intérieur de l'isolation (6) jusqu'à la région supérieure de l'accumulateur, pénètrent à cet endroit avec un espacement vertical l'une de l'autre dans la chambre supérieure (5) de l'accumulateur, d'où une conduite (2) conduit à la sortie (15) et l'autre conduite (3) est guidée à l'intérieur de la chambre (7) de l'accumulateur vers le bas jusqu'à l'entrée (14).

3. Accumulateur de chaleur selon la revendication 1, caractérisé en ce que les deux conduites (2, 3) pénètrent dans l'isolation sous vide (6) dans la région inférieure de l'accumulateur, s'étendent approximativement verticalement à l'intérieur de l'isolation sous vide (6) jusqu'à la région supérieure de l'accumulateur, en ce que la conduite (2) pénètre dans la chambre supérieure (5) de l'accumulateur et conduit à la sortie (15) et en ce que la conduite (3) présente, à l'intérieur de l'isolation (6), une pièce cintrée avec une région verticale (16) suffisante, pénètre dans la chambre inférieure (4) de l'accumulateur et conduit directement à l'entrée (14).

4. Accumulateur de chaleur selon la revendication 1, caractérisé en ce que les deux conduites (2, 3) pénètrent dans l'isolation (6) dans la région supérieure ou inférieure de l'accumulateur, sont guidées vers le bas à l'intérieur de l'isolation sous vide (6) jusqu'à un arc et vont vers le haut avec une région verticale suffisante (16), afin de pénétrer dans la chambre supérieure (5) de l'accumulateur, d'où la conduite (2) conduit à la sortie (15) et l'autre conduite (3) est guidée à l'intérieur de la chambre (7) de l'accumulateur vers le bas jusqu'à l'entrée (14).

5. Accumulateur de chaleur selon les revendications 1 à 4, caractérisé en ce que le volume d'accumulation est d'environ 4 à 15 litres et la charge et la décharge s'effectuent dans une direction d'écoulement constante dans l'accumulateur de chaleur (1), l'entrée de l'écoulement étant réalisable exclusivement dans la chambre inférieure (4) de l'accumulateur.

6. Accumulateur de chaleur selon l'une quelconque des revendications précédentes, caractérisé en ce que le dispositif d'alternance de la charge (8) est réalisé en tant que sortie à tourbillon avec des dimensions en longueur et en largeur essentiellement identiques.

7. Accumulateur de chaleur selon la revendication 6, caractérisé en ce que la sortie à tourbillon est de préférence circulaire, avec des ailettes (140) partant sous forme de rayons depuis l'entrée (14)/la sortie (15) se trouvant au centre et allant jusqu'à la périphérie (141), et présentant un angle d'attaque (142).

**8.** Accumulateur de chaleur selon l'une quelconque des revendications 1 à 5, caractérisé en ce que le dispositif d'alternance de la charge (8) présente une longueur essentiellement plus grande que la largeur et possède au moins une rangée d'ouvertures (81) d'entrée ou de sortie de l'écoulement pour l'introduction indirecte.

**9.** Accumulateur de chaleur selon la revendication 8, caractérisé en ce que le dispositif d'alternance de la charge (8) se compose de tubes disposés coaxialement (82, 83) avec une rangée d'ouvertures (81) d'entrée ou de sortie dans lé tube intérieur (82) et du côté opposé dans le tube extérieur (83).

**10.** Accumulateur de chaleur selon la revendication 8, caractérisé en ce que le dispositif d'alternance de la charge (8) présente deux parois longitudinales latérales verticales (84), qui possèdent, sur leurs côtés longitudinaux s'appliquant contre le fond de la chambre de l'accumulateur (4, 5) une rangée d'ouvertures (81) d'entrée et de sortie, les portions des ouvertures (81) étant recourbées vers l'intérieur et en ce que les parois longitudinales (84) sont fermées au niveau de leurs faces frontales, et enferment une chambre (86), par le biais d'une fermeture (85) supérieure en forme de toit pointu les reliant.

**11.** Accumulateur de chaleur selon la revendication 8 ou 10, caractérisé en ce que la chambre (86) est divisée par un fond intermédiaire (87) présentant des ouvertures d'entrée et de sortie, et les côtés longitudinaux des parois longitudinales (84) s'appliquant contre le fond de la chambre (4, 5) de l'accumulateur présentant des fentes d'entrée et de sortie de l'écoulement (88) allant au moins sur une portion longitudinale considérable.

**12.** Procédé de charge et de décharge d'un accumulateur de chaleur pour un véhicule à moteur selon la revendication 1 ou l'une quelconque des revendications 2 à 11, dans lequel la charge et la décharge sont effectuées par l'introduction du fluide de refroidissement et par extraction simultanée du fluide de refroidissement se trouvant dans l'accumulateur de chaleur, caractérisé en ce que la décharge de l'accumulateur de chaleur (1) s'effectue par l'introduction du fluide de refroidissement froid dans la chambre inférieure (4) de l'accumulateur et la charge s'effectue par l'introduction du fluide de refroidissement chaud dans la chambre supérieure (5) de l'accumulateur, avec une vitesse d'écoulement d'environ 0,1 à 0,5 m/s, et en exploitant le système de couches de température, la charge ou la décharge de l'accumulateur de chaleur (1) s'effectue pratiquement complètement en l'espace de 1 à 100 s.

Fig. 2

Fig. 1

Fig. 4

Fig. 3

Fig. 15

Fig. 14

Fig. 5

Fig. 6

Fig.7

Fig.8

Fig.9

Fig.10

Fig.11

Fig. 12

Fig. 13

Fig. 16

Zeit s]